(19) Europäisches Patentamt
European Patent Office
Office européen des brevets

(11) EP 4 516 825 A1

(12) EUROPEAN PATENT APPLICATION
published in accordance with Art. 153(4) EPC

(43) Date of publication:
**05.03.2025 Bulletin 2025/10**

(21) Application number: **22940134.4**

(22) Date of filing: **27.04.2022**

(51) International Patent Classification (IPC):
***C08F 220/34*** *(2006.01)* ***C08F 230/08*** *(2006.01)*
***G02C 7/04*** *(2006.01)*

(52) Cooperative Patent Classification (CPC):
**C08F 220/34; C08F 230/08; G02C 7/04**

(86) International application number:
**PCT/JP2022/019045**

(87) International publication number:
**WO 2023/209855 (02.11.2023 Gazette 2023/44)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **MENICON CO., LTD.**
**Naka-ku**
**Nagoya-shi, Aichi 460-0006 (JP)**

(72) Inventors:
- **FUKUDA Yoshimasa**
**Kasugai-shi, Aichi 487-0032 (JP)**
- **HATTORI Hiroshi**
**Kasugai-shi, Aichi 487-0032 (JP)**

(74) Representative: **Plasseraud IP**
**104 Rue de Richelieu**
**CS92104**
**75080 Paris Cedex 02 (FR)**

# (54) ADDITION TYPE POLYMER AND SILICONE HYDROGEL LENS MATERIAL

(57) The additive polymer is an additive polymer capable of increasing a tensile fracture strength and a toughness of a silicone hydrogel to add to the silicone hydrogel. The additive polymer includes a benzotriazole skeleton and does not have a polymerizable group.

EP 4 516 825 A1

## Description

### Technical Field

The present invention relates to an additive polymer and a silicone hydrogel lens material.

### Background Art

A silicone hydrogel lens material that includes a copolymer component including a compound A that includes an ethylene-type unsaturated group and a group including a polydimethylsiloxane constitution bonded to each other with an urethane bond, an alkoxy group-containing acrylate B, and a phenylalkyl acrylate or phenoxyalkyl acrylate C has been proposed (e.g., see PTL 1). This contact lens material is transparent, low in adhesion, and safe since it does not adsorb to cornea while the contact lens is used. Moreover, such contact lens material is easy to handle. In addition, since the contact lens material has an adequate strength and adequate flexibility or elasticity in a balanced manner, contact lenses having excellent shape stability can be provided.

### Citation List

### Patent Literature

PTL 1: JP 2005-089654 A

### Summary of Invention

### Technical Problem

Although it is described that the silicone hydrogel lens material of PTL 1 has an adequate strength and adequate flexibility or elasticity in a balanced manner since it includes the compounds A to C in a combined manner, the properties are not at sufficient levels. Further improvement of the mechanical properties of silicone hydrogel lens materials, such as tensile fracture strength and toughness, has been anticipated.

The present invention was made in light of such issues. A principal object of the present invention is to provide an additive polymer and a silicone hydrogel lens material with which the mechanical properties of a silicone hydrogel lens material can be further increased.

### Solution to Problem

The inventors of the present invention conducted extensive studies in order to achieve the above object and consequently found that adding a predetermined amount of an additive polymer that includes a benzotriazole skeleton and does not have a polymerizable group to a silicone hydrogel further increases mechanical properties. Thus, the present invention was made.

Specifically, an additive polymer according to the present invention is

an additive polymer capable of increasing a tensile fracture strength and a toughness of a silicone hydrogel to add to the silicone hydrogel,
the additive polymer including a benzotriazole skeleton, the additive polymer not having a polymerizable group.
A silicone hydrogel lens material according to the present invention includes
a base material that constitutes a silicone hydrogel; and
the above-described additive polymer,
wherein a content of the additive polymer is 20 parts by mass or less relative to 100 parts by mass of the base material.

### Advantageous Effects of Invention

The additive polymer and silicone hydrogel lens material according to the present invention further improve mechanical properties. The reasons for which such advantageous effects are produced are considered as follows. For example, the additive polymer that does not have a polymerizable group and includes a benzotriazole skeleton is physically incorporated into the constitution of the base material that constitutes a silicone hydrogel. This may enhance mechanical properties, such as tensile fracture strength and toughness.

Description of Embodiments

<Additive Polymer>

An additive polymer disclosed in this embodiment is an additive polymer capable of increasing the tensile fracture strength and toughness of a silicone hydrogel to add to the silicone hydrogel. The additive polymer includes a benzotriazole skeleton and does not have a polymerizable group. Note that the polymerizable group which the additive polymer does not have is a group capable of addition polymerization, such as a vinyl group, an acryloyl group, or a methacryloyl group, which does not include a hydroxyl group, an aromatic ring, or a hetero ring. Hereinafter, an acrylate having an acryloyl group and a methacrylate having a methacryloyl group are referred to collectively as "(meth)acrylate". Hereinafter, for the sake of simplicity, a constitutional moiety included in a polymer is specified with the name of a monomer, and a monomer described as an example in the description of a polymer constitution is considered as a constitution formed by the polymerizable group thereof being bonded to another constitutional moiety. For example, a monomer described as "(meth)acrylate" in the description of a polymer constitution is considered to be present in the polymer in the form of "(meth) acrylate constitution", which is formed by another constitutional moiety being bonded to (polymerized with) the double bond of the (meth)acrylate.

It is preferable that the additive polymer have a constitutional moiety that is the same as the moiety constituting the base material that constitutes a silicone hydrogel. When the additive polymer has such a constitutional moiety, compatibility with the monomers constituting the silicone hydrogel can be further enhanced. Examples of the above constitutional moiety include a silicone moiety having a siloxane bond, an amide moiety having an amide bond, an ether moiety having an ether bond, and an ester moiety having an ester bond. The above constitutional moiety may include one or more selected from the constitutions of monomers constituting the base material which are described below, and examples thereof include the constitutions of hydrophilic acrylamide monomers, such as N-vinyl-2-pyrrolidone (N-VP), 1-methyl-3-methylene-2-pyrrolidinone (N-MMP), and N, N-dimethylacrylamide (DMAA). Among these, the above constitutional moiety is preferably a silicone moiety. For example, the additive polymer may have a constitution constituted by a triazole moiety A including a benzotriazole skeleton and a silicone moiety B having a siloxane bond which are bonded to each other with a carbon chain. The silicone moiety B may be the same as the moiety constituting the base material that constitutes a silicone hydrogel. The benzotriazole moiety A may be constituted by, for example, a benzotriazole skeleton being bonded to a carbon chain with an aromatic ring and a bonding chain that are interposed therebetween. The above aromatic ring may be a benzene ring having one or more substituents. Examples of the substituents include one or more selected from a hydroxyl group, an alkyl group having 6 or less carbon atoms, and an acyl group having 6 or less carbon atoms. Examples of the bonding chain include an alkyl chain having 6 or less carbon atoms. The bonding chain may include an ester bond.

The silicone moiety B may have, for example, a silicone-containing alkyl (meth)acrylate constitution. Examples of such a silicone moiety B include trimethylsiloxydimethylsilylmethyl (meth)acrylate, trimethylsiloxydimethylsilylpropyl (meth)acrylate, methylbis(trimethylsiloxy)silylpropyl (meth)acrylate, tris(trimethylsiloxy)silylpropyl (meth)acrylate, mono[methylbis(trimethylsiloxy)siloxy]bis(trimethylsiloxy)si lylpropyl (meth)acrylate, tris[methylbis (trimethylsiloxy)siloxylsilylpropyl (meth)acrylate, methylbis (trimethylsiloxy)silylpropylglyceryl (meth)acrylate, tris(trimethylsiloxy)silylpropylglyceryl (meth)acrylate, mono[methylbis(trimethylsiloxy)siloxy]bis(trimethylsiloxy)si lylpropylglyceryl (meth)acrylate, tri methylsilylethyltetramethyldisiloxypropylglyceryl (meth)acrylate, trimethylsilylmethyl (meth)acrylate, trimethylsilylpropyl (meth)acrylate, trimethylsilylpropylglyceryl (meth)acrylate, trimethylsiloxydimethylsilylpropylglyceryl (meth)acrylate, methylbis (trimethylsiloxy)silylethyltetramethyldisiloxymethy 1 (meth)acrylate, tetramethyltriisopropylcyclotetrasiloxanylpropyl (meth)acrylate, and tetramethyltriisopropylcyclotetrasiloxybis(trimethylsiloxy)s ilylpropyl (meth)acrylate. Among these, tris(trimethylsiloxy)silylpropyl methacrylate (TRIS) is preferable because it is easily available.

The additive polymer preferably has a constitution represented by Formula (1) below. Note that, in Formula (1), m and n represent an integer, $R^1$, $R^2$, and $R^3$ represent a group, $R^1$ and $R^3$ may represent different groups or the same group and more preferably represent the same group, and $R^2$ may represent one or more selected from a hydrogen atom, a hydroxyl group, an alkyl group, and an acyl group. The above alkyl group and the above acyl group preferably have 6 or less carbon atoms. $R^1$ and $R^3$ represent a bonding chain, and examples thereof include an alkyl chain having 6 or less carbon atoms. The bonding chain may include an ester bond. In Formula (1), the triazole moiety A and the silicone moiety B may be bonded to the carbon chain in any order. In Formula (1), the carbon chain to which the triazole moiety A and the silicone moiety B are bonded may be an alkyl chain having 1 to 6 carbon atoms. Specifically, it is more preferable that the additive polymer have the constitution represented by Formula (2). Note that, in Formulae (1) and (2), the triazole moiety A and the silicone moiety B may be bonded to the carbon chain in any manner. That is, two or more triazole moieties A may be arranged adjacent to one another, and two or more silicone moieties B may be arranged adjacent to one another. The molar ratio m/n of the triazole moiety A (m) to the silicone moiety B (n) having a siloxane bond is preferably 1/1 to 4/1. When the molar ratio m/n falls within the above range, the tensile fracture strength and toughness of the silicone hydrogel can be further increased. The above molar ratio is more preferably 2/1 to 3.5/1.

[Chem. 1]

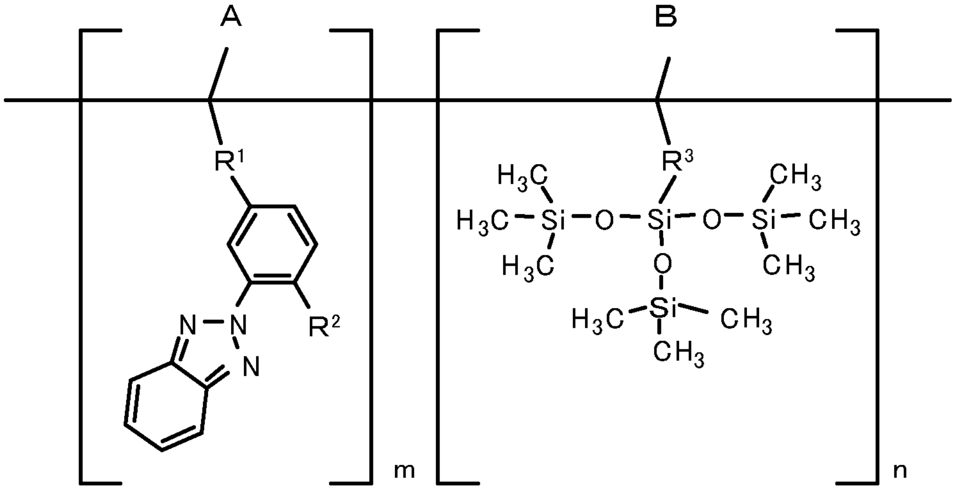

...(1)

[Chem. 2]

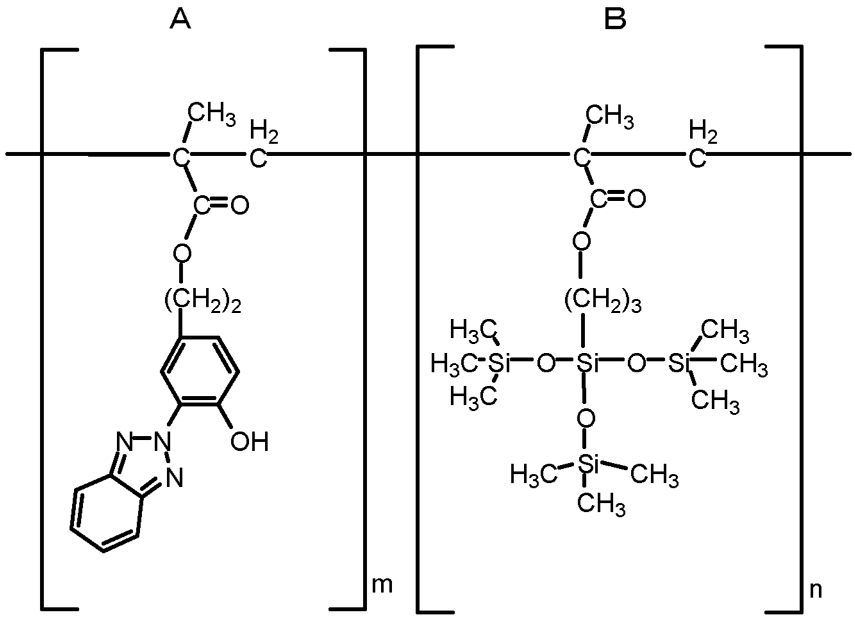

...(2)

It is preferable to add the additive polymer to a silicone hydrogel lens material such that the amount of the additive polymer is more than 0 part by mass and 20 parts by mass or less relative to 100 parts by mass of the base material that constitutes a silicone hydrogel. When the amount of the additive polymer added falls within the above range, the tensile fracture strength and toughness of the silicone hydrogel can be further increased. The above content of the additive polymer is preferably 0.1 parts by mass or more, is more preferably 0.2 parts by mass or more, and is further preferably 0.5 parts by mass or more. The above content of the additive polymer is preferably 15 parts by mass or less, is more preferably 10 parts by mass or less, and is further preferably 5 parts by mass or less. When the additive polymer is added to a silicone hydrogel, the tensile fracture strength and toughness of the silicone hydrogel may be increased by 10% or more and 15% or more, respectively, compared with a silicone hydrogel that does not include the additive polymer. The increase in the tensile fracture strength achieved by the addition of the additive polymer may be 50% or more or 100% or more. The increase in the toughness achieved by the addition of the additive polymer may be 50% or more or 100% or more.

A method for producing the additive polymer is described below. The production method may include, for example, a polymerization step in which raw material monomers that include at least a monomer including the benzotriazole skeleton are polymerized with one another. The raw material monomers may include a monomer having a moiety that is the same as that constituting the base material that constitutes a silicone hydrogel. Examples of the monomer including a constitutional moiety of the base material include a silicone monomer having a siloxane bond, a

monomer having an amide bond, a monomer having an ether bond, and a monomer having an ester bond. Among these, a silicone monomer is preferable. As raw material monomers, monomers having the constitutions described in the additive polymer can be used. The mixing ratio of the raw material monomers is preferably set such that, for example, the molar ratio m/n of the polymerization product of the monomer (m) including a benzotriazole skeleton to the polymerization product of the monomer (n) having a constitutional moiety that is the same as that of the base material is 1/1 to 4/1. The molar ratio m/n is more preferably 2/1 to 3.5/1. Examples of the polymerization method include radical polymerization, which is performed using a radical polymerization initiator. Examples of the radical polymerization initiator include an azo compound, a peroxide compound, and a dihalogen. Examples of the azo compound include azobisisobutyronitrile (AIBN) and 1,1'-azobis(cyclohexanecarbonitrile) (ABCN). Examples of the peroxide compound include benzoyl peroxide and methyl ethyl ketone peroxide. Examples of the dihalogen include a chlorine molecule. The amount of the polymerization initiator used relative to 100 parts by mass of the raw material monomers is preferably 0.001 parts by mass or more and 2 parts by mass or less and is more preferably 0.01 parts by mass or more and 1 part by mass or less.

<Silicone Hydrogel Lens Material>

A silicone hydrogel lens material disclosed in this embodiment includes a base material that constitutes a silicone hydrogel and the above-described additive polymer. The content of the additive polymer is more than 0 part by mass and 20 parts by mass or less relative to 100 parts by mass of the base material. The content of the additive polymer is preferably 0.1 parts by mass or more, is more preferably 0.2 parts by mass or more, and is further preferably 0.5 parts by mass or more relative to 100 parts by mass of the base material. The content of the additive polymer is more preferably 15 parts by mass or less and is further preferably 10 parts by mass or less relative to 100 parts by mass of the base material. The tensile fracture strength and toughness of the silicone hydrogel lens material may be increased by 10% or more and 15% or more, respectively, compared with a silicone hydrogel that does not include the additive polymer. The increase in the tensile fracture strength of the silicone hydrogel lens material may be 50% or more or 100% or more compared with a silicone hydrogel that does not include the additive polymer. The increase in the toughness of the silicone hydrogel lens material may be 50% or more or 100% or more compared with a silicone hydrogel that does not include the additive polymer. The above increases can be adjusted by changing the constitution and content of the additive polymer.

The base material constituting the silicone hydrogel lens material may include a silicone moiety having a siloxane bond, an amide moiety having an amide bond, an ether moiety having an ether bond, and an ester moiety having an ester bond and the like. The above constitutional moieties may be formed by polymerization of a silicone macromer or monomer having a siloxane bond, a monomer having an amide bond, a monomer having an ether bond, a monomer having an ester bond, and the like. The above monomers have a polymerizable group, such as a vinyl group, an acryloyl group, or a methacryloyl group. The base material that constitutes a silicone hydrogel has a constitution polymerized with the polymerizable group, such as a silicone macromer constitution or a silicone monomer constitution.

The silicone macromer constitution may have a constitution including, for example, at least a urethane bond, an ether bond, an ester bond, and a polydimethylsiloxane moiety. The above silicone macromer may have the constitution represented by Formula (3). In the following constitution of the silicone macromer, a represents an integer of 30 to 50, $R^4$ and $R^5$ represent one or more selected from an alkyl group and a halogen-substituted alkyl group, one or more $R^4$'s may be different from or the same as one another, and one or more $R^5$'s may be different from or the same as one another. $R^4$ and $R^5$ preferably have 6 or less carbon atoms. Examples of the halogen substituent include chlorine and fluorine, and fluorine is preferable. Specific examples of the constitution of the silicone macromer include the constitutions represented by Formulae (4) and (5). The content of the silicone macromer is preferably 5% by mass or more and 40% by mass or less of the total amount of the base material. It is preferable that the above content fall within the above range because, in such a case, oxygen permeability and flexibility can be further enhanced while polymerizability can be further enhanced.

[Chem. 3]

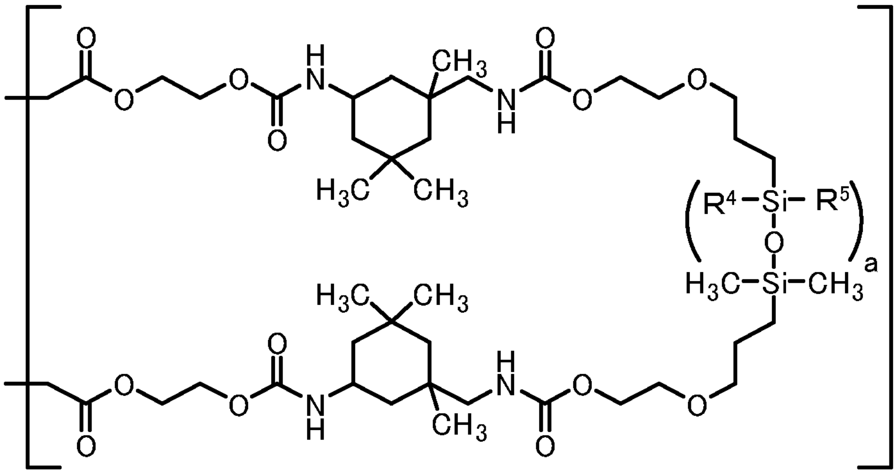

···(3)

(where a represents an integer of 30 to 50, $R^4$ and $R^5$ represent one or more selected from an alkyl group and a halogen-substituted alkyl group, one or more $R^4$'s and $R^5$'s may be different from or the same as one another respectively)

[Chem. 4]

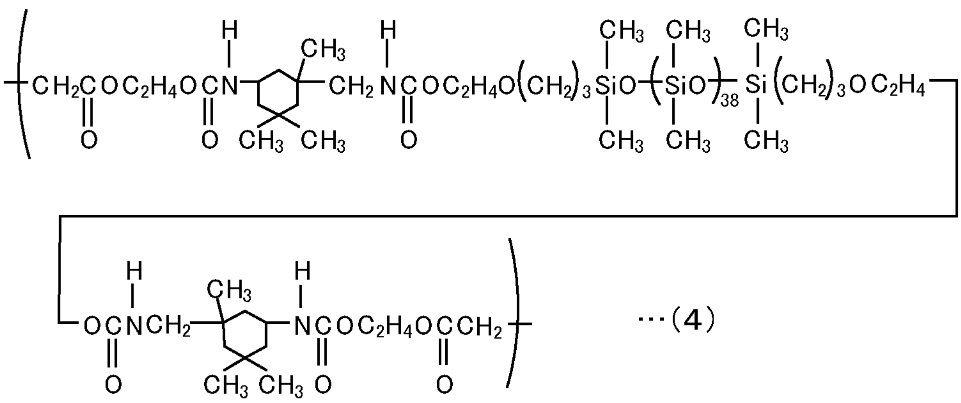

···(4)

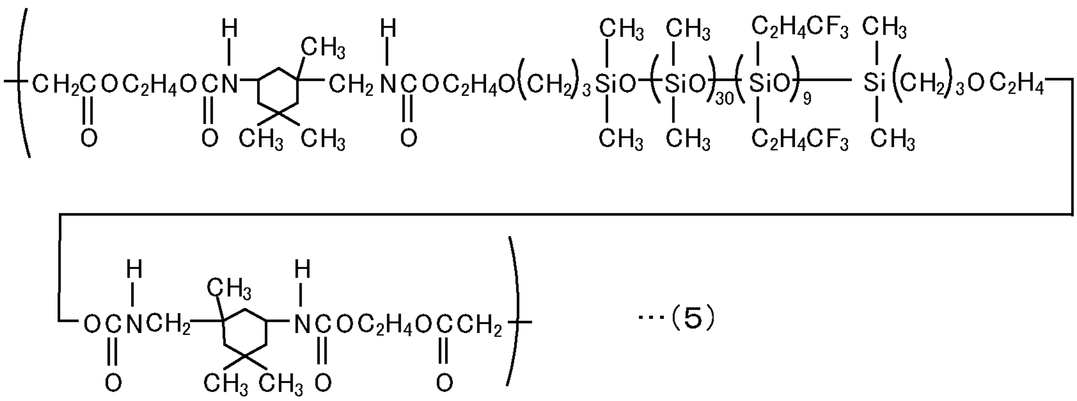

···(5)

Examples of the silicone monomer constitution include one or more selected from the monomers described in the description of the silicone moiety B. The content of the silicone monomer constitution is preferably 10% by mass or more and 40% by mass or less of the total amount of the base material. It is preferable that the above content fall within the above range because, in such a case, oxygen permeability and flexibility can be further enhanced while polymerizability can be further enhanced.

The monomer constitution having an amide bond may be, for example, a constitution formed by polymerization of an amide compound (monomer) having a polymerizable group. Examples of such a monomer include N,N-dimethyl(meth)acrylamide, N,N-diethyl(meth)acrylamide, N,N-dipropyl(meth)acrylamide, N,N-dimethylaminopropyl(meth)acrylamide,

and N,N-diethylaminopropyl(meth)acrylamide. Among these, N,N-dimethylacrylamide (DMAA) is preferable. As a hydrophilic constitution, for example, an unsaturated carboxylic acid, such as methacrylic acid or acrylic acid, an acrylsubstituted alcohol, such as 2-hydroxyethyl methacrylate or 2-hydroxyethyl acrylate, a vinyl lactam, such as 1-methyl-3-methylene-2-pyrrolidinone (N-MMP) or N-vinyl-2-pyrrolidone (N-VP), or a (meth)acrylate having a polyethylene glycol moiety, may be included. The content of the above monomer is preferably 40% by mass or less of the total amount of the base material. When the above content falls within the above range, an excessive increase in water content can be further limited and impacts on the feeling of dryness can be further reduced. The above content is preferably 10% by mass or more. When the above content is 10% by mass or more, a sufficient degree of hydrophilicity can be achieved.

Examples of the monomer constitution having an ether bond include the following constitutions: methoxyethyl (meth)acrylate, ethoxy diethylene glycol (meth)acrylate, methoxy triethylene glycol (meth)acrylate, methoxy tetraethylene glycol (meth)acrylate, methoxy polyethylene glycol (meth)acrylate, and hydroxy diethylene glycol (meth)acrylate. Among these, methoxyethyl acrylate (2-MTA) is preferable. The content of the above monomer is preferably 10% by mass or more and 40% by mass or less of the total amount of the base material.

The silicone hydrogel lens material may further include, in addition to the base material, a crosslinked constitution formed by polymerization of a crosslinking agent having a plurality of polymerizable groups, a colorant constitution formed by polymerization of a colorant having a polymerizable group, and the like. Examples of the crosslinked constitution include the following constitutions: allyl (meth)acrylate, vinyl (meth)acrylate, 4-vinylbenzyl (meth)acrylate, 3-vinylbenzyl (meth)acrylate, (meth)acryloyloxyethyl (meth)acrylate, ethylene glycol di(meth)acrylate, diallyl adipate, diethylene glycol di(meth)acrylate, diethylene glycol diallyl ether, and triethylene glycol di(meth)acrylate. Among these, for example, allyl methacrylate (AMA) and ethylene glycol dimethacrylate (EDMA) are preferable. The content of the crosslinked constitution is preferably 0.05 parts by mass or more and 1 part by mass or less relative to 100 parts by mass of the total amount of the base material.

Examples of the colorant constitution include the following constitutions: a phthalocyanine-based polymerizable colorant, such as a phthalocyanine-containing polymethacrylic acid ester; an azo-based polymerizable colorant, such as 1-phenylazo-4-(meth)acryloyloxynaphthalene; an anthraquinone-based polymerizable colorant, such as 1,5-bis((meth) acryloylamino)-9,10-anthraquinone, 1,4-bis(4-(2-methacryloxyethyl))phenylaminoanthraquinone (Reactive Blue 246), and 1,4-bis((2-hydroxyethyl)amino)-9,10-anthracenedione (Reactive Blue 247); and a nitro-based polymerizable colorant, such as o-nitroanilinomethyl (meth)acrylate. Among these, a phthalocyanine-based polymerizable colorant is preferable. Examples of the phthalocyanine-based polymerizable colorant include (meth)acryloylated tetraamino copper phthalocyanine and (meth)acryloylated (dodecanoylated tetraamino copper phthalocyanine). Moreover, a benzophenone-based polymerizable ultraviolet absorption colorant, such as 2,4-dihydroxy-3(p-styrenoazo)benzophenone; a benzoic acid-based polymerizable ultraviolet absorption colorant, such as phenyl 2-hydroxy-4-(p-styrenoazo)benzoate; and the like may be included. The content of the above colorant constitution is preferably 0.05 parts by mass or more and 1 part by mass or less relative to 100 parts by mass of the total amount of the base material.

The water content in the silicone hydrogel lens material is preferably 40% by mass or more and 70% by mass or less, is more preferably 60% by mass or less, and is further preferably 50% by mass or less. When the above water content is 40% by mass or more, the wettability of the lens material can be enhanced. When the above water content is 70% by mass or less, shape retention property can be further enhanced.

The refractive index of the silicone hydrogel lens material is preferably 1.2 or more and is more preferably 1.4 or more. It is preferable to enhance the refractive index for ophthalmic lenses.

The oxygen permeability coefficient Dk of the silicone hydrogel lens material is preferably 20 or more and is more preferably 50 or more. It is preferable to enhance the oxygen permeability coefficient of an ophthalmic lens. Note that the Dk value is expressed in units of $10^{-11}$ ($cm^2$/sec) ·($mLO_2$ (mL ·mmHg)).

The luminous transmittance of the silicone hydrogel lens material is preferably 95% or more and is more preferably 96% or more. The luminous transmittance of an ophthalmic lens is preferably maximized.

A method for producing the silicone hydrogel lens material is described below. This production method may include, for example, a polymerization step in which a base material monomer that is to be formed into a base material that constitutes a silicone hydrogel is mixed with an additive polymer that does not include a polymerizable group in order to cause polymerization of the base material monomer. The base material monomer may include a silicone compound having a polymerizable group and a siloxane bond, an amide compound having a polymerizable group and an amide bond, and an ether compound having a polymerizable group and an ether bond. The mixing ratio between the raw material components may be set to fall within the range described in the description of the silicone hydrogel lens material.

Examples of the silicone compound include the above-described silicone macromer and the above-described silicone monomer. For example, the silicone macromer may be a compound including at least a urethane bond, an ether bond, an ester bond, and a polydimethylsiloxane moiety. Such a silicone macromer may have the constitution represented by Formula (6). Specific examples of the silicone macromer include Formulae (7) and (8). Examples of the silicone monomer include monomers having any of the constitutions described in the description of the silicone moiety B. Among those, tris(trimethylsiloxy)silylpropyl methacrylate (TRIS) is preferable.

[Chem. 5]

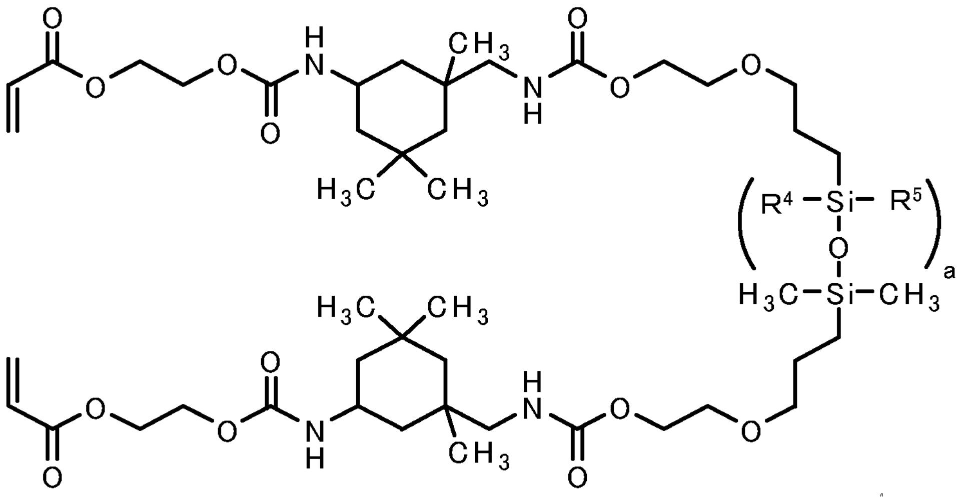

···(6)

(where a represents an integer of 30 to 50, $R^4$ and $R^5$ represent one or more selected from an alkyl group and a halogen-substituted alkyl group, one or more $R^4$'s may be different from or the same as one another, and one or more $R^5$'s may be different from or the same as one another)

[Chem. 6]

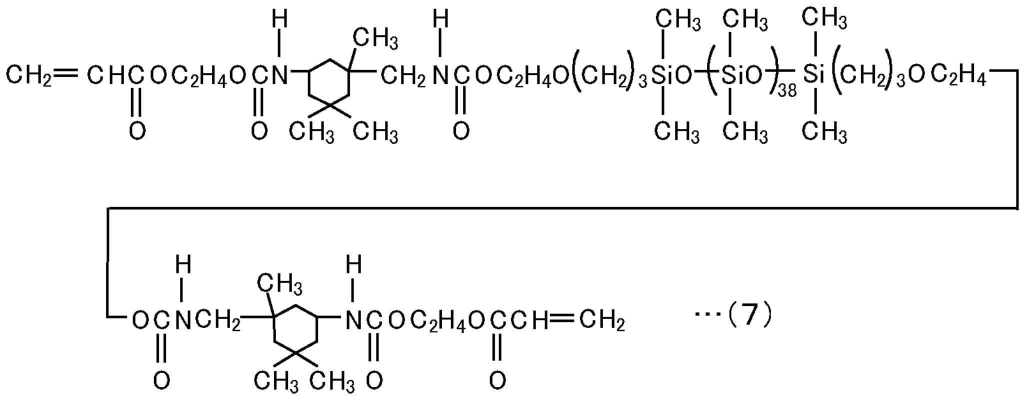

···(7)

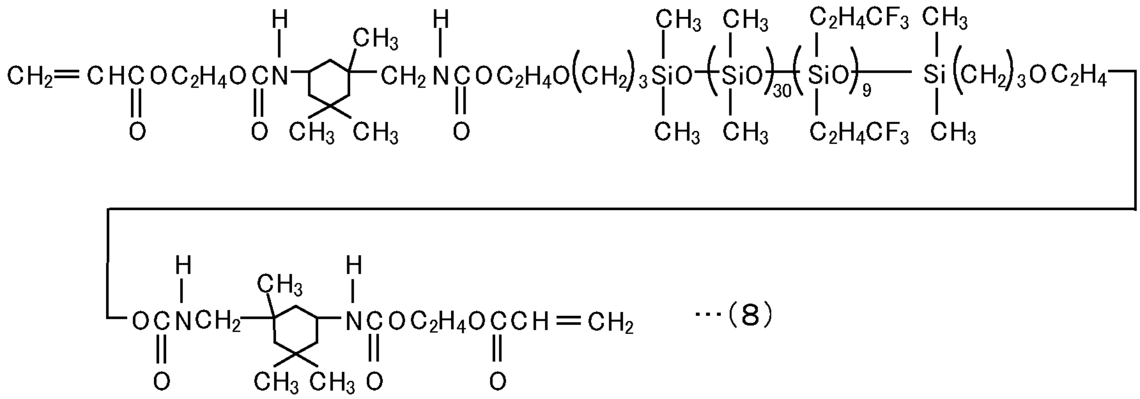

···(8)

Examples of the amide compound include monomers having any of the constitutions described in the description of the monomer constitution having an amide bond. Among those, N,N-dimethylacrylamide (DMAA) is preferable. As a hydrophilic monomer, for example, an unsaturated carboxylic acid, such as methacrylic acid or acrylic acid, an acrylsubstituted alcohol, such as 2-hydroxyethyl methacrylate or 2-hydroxyethyl acrylate, a vinyllactam, such as 1-methyl-3-methylene-2-pyrrolidinone or N-vinylpyrrolidone, or a (meth)acrylate having a polyethylene glycol moiety, may be used.

Examples of the ether compound include monomers having any of the constitutions described in the description of the monomer constitution having an ether bond. Among those, methoxyethyl acrylate (2-MTA) is preferable.

In the polymerization step, a crosslinking agent, a polymerizable colorant, a polymerization initiator, and the like may be further used in addition to the base material monomer. The crosslinking agent may be a compound having any of the constitutions described in the description of the crosslinked constitution. The polymerizable colorant may be a compound having any of the constitutions described in the description of the colorant constitution. Moreover, in the polymerization step, a water-soluble organic solvent, a surfactant, a cooling agent, a thickener, and the like, which are non-polymerizable, may be used as additives.

In the step of polymerizing the silicone hydrogel lens material, thermal polymerization, photopolymerization, or the like may be performed. As a polymerization initiator, a thermal polymerization initiator, a photopolymerization initiator, or the like can be used. For example, a thermal polymerization initiator is preferably used when the mixing ratio of the additive polymer is relatively high, that is, for example, the content of the additive polymer is 5 parts by mass or more relative to 100 parts by mass of the total amount of the base material. A photopolymerization initiator is preferably used when the mixing ratio of the additive polymer is relatively low, that is, for example, the content of the additive polymer is less than 5 parts by mass. Examples of the thermal polymerization initiator include 2,2'-azobisisobutyronitrile, 2,2'-azobis-(2,4-dimethylvaleronitrile) (V-65), benzoyl peroxide, t-butyl hydroperoxide, cumene hydroperoxide, lauroyl peroxide, t-butylperoxy hexanoate, and 3,5,5-trimethylhexanoyl peroxide. The above thermal polymerization initiators can be used alone or in a mixture of two or more. Examples of the photopolymerization initiator include a phosphine oxide-based photopolymerization initiator, a benzoin-based photopolymerization initiator, a phenone-based photopolymerization initiator, and a thioxanthone-based photopolymerization initiator. Examples of the phosphine oxide-based photopolymerization initiator include 2,4,6-trimethylbenzoyl-diphenylphosphine oxide (TPO) and bis(2,4,6-trimethylbenzoyl)-phenylphosphine oxide and the like. Examples of the benzoin-based photopolymerization initiator include methyl orthobenzoylbenzoate and methyl benzoylformate. Examples of the phenone-based photopolymerization initiator include 2-hydroxy-2-methyl-1-phenylpropan-1-one (HMPPO) and p-isopropyl-α-hydroxyisobutylphenone. Examples of the thioxanthone-based photopolymerization initiator include 2-chlorothioxanthone and 2-methylthioxanthone. The above photopolymerization initiators can be used alone or in a mixture of two or more. The amount of the polymerization initiator used relative to 100 parts by mass of the base material monomer is preferably 0.001 parts by mass or more and 2 parts by mass or less and is more preferably 0.01 parts by mass or more and 1 part by mass or less.

In the polymerization step, the raw material composition can be cured by molding. In the case where the raw material composition is polymerized by heating, the raw material composition including the thermal polymerization initiator is charged into a mold corresponding to the shape of the intended ophthalmic lens material and the mold is subsequently heated to cause polymerization. The material constituting the mold is not limited and may be any material capable of withstanding the temperatures required for polymerization and curing. In the case where the raw material composition is polymerized by being irradiated with light, the raw material composition including the photopolymerization initiator is charged into a mold corresponding to the shape of the intended ophthalmic lens material and the mold is subsequently irradiated with light to cause polymerization. The material constituting the mold used in the polymerization performed by light irradiation is not limited and may be any material permeable to the light necessary for polymerization and curing. General-purpose resins, such as polypropylene, polystyrene, nylon, and polyester, are preferably used. Glass may also be used.

According to the additive polymer and silicone hydrogel lens material according to the embodiments described in detail above, for example, the additive polymer that does not have a polymerizable group and includes a benzotriazole skeleton is physically incorporated into the constitution of the base material that constitutes a silicone hydrogel. This may enhance mechanical properties, such as a tensile fracture strength and toughness. It is considered that the benzotriazole skeleton, which has a low acid dissociation constant (pKa), interacts with amide bonds and the like in the surrounding of the lens material to increase mechanical strength.

It is needless to say that the present invention is not limited by the above-described embodiments and may be implemented in various aspects within the scope of the present invention.

## Examples

Examples in which the silicone hydrogel lens material according to the present invention was specifically implemented are described below as test examples. Test Examples 5 to 10 and 12 correspond to the examples of the present invention, while Test Examples 1 to 4 and 11 correspond to comparative examples. It is needless to say that the present invention is not limited by the examples below and may be implemented in various aspects within the scope of the present invention.

[Components Used]

The abbreviations for the compounds used in Examples are as follows.

<Base Material>

Silicone macromer: Silicone compound represented by Formula (7)
TRIS: Tris(trimethylsiloxy)silylpropyl methacrylate
N-VP: N-vinyl-2-pyrrolidone
N-MMP: 1-Methyl-3-methylene-2-pyrrolidinone
2-MTA: 2-Methoxyethyl acrylate
DMAA: N,N-dimethylacrylamide

<Crosslinking Agent>

AMA: Allyl methacrylate
EDMA: Ethylene glycol dimethacrylate

<Polymerization Initiator>

TPO: 2,4,6-Trimethylbenzoyldiphenylphosphine oxide
V-65: 2,2'-Azobis-(2,4-dimethylvaleronitrile)

<Colorant>

PCPMA: Phthalocyanine-containing polymethacrylic acid ester
RB-247: 1,4-Bis((2-hydroxyethyl)amino)-9,10-anthracenedione

<Monomers for Additive Polymer>

Benz-M: 2-(2'-Hydroxy-5'-methacryloyloxyethylphenyl)-2H-benzotriazole

<Comparative Polymer>

TMSSt: Tris(trimethylsiloxy)silylstyrene

[Synthesis of Additive Polymers 1 to 4]

Into a three-necked flask (reaction container) having a volumetric capacity of 200 mL, 7 g of Benz-M and 5 g of TRIS (molar charging ratio = 1.84:1) were charged, and they were dissolved in 50 mL of toluene. The reaction container was immersed in an oil bath heated at 80°C. After it had been confirmed that the temperature of the liquid inside the reaction container had reached 80°C, 0.60 g of azobisisobutyronitrile (AIBN) dissolved in 15 mL of toluene was quickly added to the reaction container in order to cause a reaction. After 24 hours, the reaction container was removed from the oil bath and cooled to room temperature. Subsequently, the reaction solution was added dropwise to 1 L of methanol stirred in a beaker at a rate of 2 drops/sec with a dropping funnel. Hereby, a polymer was precipitated. After suction filtration had been conducted with a glass funnel, the polymer was washed with 100 mL of methanol twice. Then, drying was performed for 1 hour with a vacuum dryer at 50°C. Hereby, about 6 g of a white solid additive polymer 1 was prepared. An additive polymer 2 was prepared using a monomer prepared by acetylating the phenolic OH of Benz-M by the same steps as described above. Additive polymers 3 and 4 were prepared using monomers that included Benz-M and TRIS at different ratios. The molar ratio between the triazole moiety (Benz-M moiety) and the silicone moiety (TRIS moiety) in the additive polymers 1

and 2 was 2.7:1, and the content of the triazole moiety was 73% by mass of the total amount. The molar ratios between the triazole moiety (Benz-M moiety) and the silicone moiety (TRIS moiety) in the additive polymers 3 and 4 were 3.1:1 and 2.2:1, respectively.

[Synthesis of Comparative Polymers 1 to 3]

Comparative polymers were prepared as in the preparation of the additive polymers using TRIS, N-VP, DMAA, and TMSSt as monomers at the mass charging ratios described in Table 1. Table 1 summarizes the constitution, weightaverage molecular weight Mw, number-average molecular weight Mn, and Mw/Mn of each of the polymers prepared.

[Table 1]

| Polymer | Constitution | Mw | Mn | Mw/Mn |
|---|---|---|---|---|
| Additive Polymer 1 | Benz-M: TRIS = 2.7:1 (mol ratio) | 7000 | 4800 | 1.46 |
| Additive Polymer 2 | Benz-M*: TRIS = 2.7:1 (mol ratio) | 7000 | 4800 | 1.46 |
| Additive Polymer 3 | Benz-M : TRIS = 3.1:1 (mol ratio) | 7610 | 5350 | 1.42 |
| Additive Polymer 4 | Benz-M TRIS = 2.2:1 (mol ratio) | 8700 | 5560 | 1.56 |
| Comparative Polymer 1 | TRIS: N-VP = 3:1 (mass ratio) | 6200 | 4800 | 1.29 |
| Comparative Polymer 2 | TRIS: DMAA = 2:1 (mass ratio) | 16000 | 10200 | 1.57 |
| Comparative Polymer 3 | TMSSt: DMAA = 1:1 (mass ratio) | 6000 | 3900 | 1.54 |
| * Additive Polymer 2: Being prepared by acetylating the phenolic OH of additive polymer 1 | | | | |

[Formulation and Polymerization of Silicone Hydrogels]

The above polymers were each dissolved in a monomer constituting a contact lens mixed solution which was miscible with the polymer and used in a large amount. The monomers listed in Table 2 were mixed with one another in an appropriate order to form a contact lens mixed solution. Note that, in order to reduce the amount of moisture absorption by the monomers during weighing, the hydrophobic monomers were weighed first. The polymerization initiator used was selected from a thermal polymerization initiator (azo-based, V-65) or a photopolymerization initiator (phosphine oxide-based, TPO). The compositions (Test Examples 6 to 8) in which the mixed solution included a large amount of benzotriazole-based additive polymer, thermal polymerization was performed using a thermal polymerization initiator. In the case where the amount of the additive polymer is small (about 1% of the formulation composition, Test Examples 1 to 5 and 9 to 12), a photopolymerization initiator was selected. The mixed solutions prepared above were each injected into a lens mold. In the thermal polymerization, polymerization was performed for 2 hours in a dryer set to 80°C. In the photopolymerization, polymerization was performed by performing irradiation for 20 minutes with a light source including blue light while an adequate illuminance (illuminance: 2.5 to 3.5 $mW/cm^2$) was maintained.

[Hydration Treatment]

After released from the molds, the resulting polymers were irradiated with plasma (RF output: 50 W, pressure: 100 Pa) for 120 seconds in a carbon dioxide atmosphere. The polymers were then immersed in distilled water to absorb water in order to perform a hydration treatment. Subsequently, heat sterilization was performed in an autoclave (2 atmospheric pressure, 121°C, 20 minutes) to prepare contact lenses. The silicone hydrogel contact lenses were used as Test Examples 1 to 12. Table 2 summarizes the mixing ratios of Test Examples 1 to 12.

[Table 2]

| Test Example / Monomer | 1 | 2 | 3 | 4 | 5 | 6 | 7 | 8 | 9 | 10 | 11 | 12 |
|---|---|---|---|---|---|---|---|---|---|---|---|---|
| | Parts by mass | Parts by mass | Parts by mass | Parts by mass | Parts by mass | Parts by mass | Parts by mass | Parts by mass | Parts by mass | Parts by mass | Parts by mass | Parts by mass |
| Silicone Macromer | 5 | 5 | 5 | 5 | 5 | 5 | 5 | 5 | 5 | 5 | 33 | 33 |
| TRIS | 30 | 30 | 30 | 30 | 30 | 30 | 30 | 30 | 30 | 30 | 22 | 22 |
| N−VP | 41 | 41 | 41 | 41 | 41 | 41 | 41 | 41 | 41 | 41 | - | - |
| N−MMP | - | - | - | - | - | - | - | - | - | - | 33.7 | 33.7 |
| 2−MTA | 24 | 24 | 24 | 24 | 24 | 24 | 24 | 24 | 24 | 24 | - | - |
| DMAA | - | - | - | - | - | - | - | - | - | - | 11.3 | 11.3 |
| AMA | 0.3 | 0.3 | 0.3 | 0.3 | 0.3 | 0.3 | 0.3 | 0.3 | 0.3 | 0.3 | - | - |
| EDMA | - | - | - | - | - | - | - | - | - | - | 0.4 | 0.4 |
| TPO | 0.6 | 0.6 | 0.6 | 0.6 | 0.6 | - | - | - | 0.6 | 0.6 | - | - |
| V−65 | - | - | - | - | - | 0.4 | 0.4 | 0.4 | 0.4 | 0.4 | **0.4** | **0.4** |
| PCPMA | 0.02 | 0.02 | 0.02 | 0.02 | 0.02 | 0.02 | 0.02 | 0.02 | - | - | 0.01 | 0.01 |
| RB−247 | - | - | - | - | - | - | - | - | 0.015 | 0.015 | - | - |
| Additive Polymer 1 | - | - | - | - | 1 | 5 | 10 | - | - | - | - | 1.2 |
| Additive Polymer 2 | - | - | - | - | - | - | - | 10 | - | - | - | - |
| Additive Polymer 3 | - | - | - | - | - | - | - | - | 1 | - | - | - |
| Additive Polymer 4 | - | - | - | - | - | - | - | - | - | 1 | - | - |
| Comparative Polymer 1 | - | 10 | - | - | - | - | - | - | - | - | - | - |
| Comparative Polymer 2 | - | - | 10 | - | - | - | - | - | - | - | - | - |
| Comparative Polymer 3 | - | - | - | 10 | - | - | - | - | - | - | - | - |

(Measurement of Strength)

A tensile test of a lens piece (thickness: 0.1 mm, width: 1.8 mm, distance between grips: 6.0 mm) was conducted in an ISO physiological saline at 20°C using a tensile tester "Autograph AG-IS" produced by Shimadzu Corporation. The

number of lenses subjected to the above test was five or more per lot. A tensile fracture strength was calculated on the basis of the maximum load before rupture and the thickness and width of a lens fragment. A toughness was calculated on the basis of rupture energy, the thickness and width of a lens piece, and the distance between grips.

(Water Content)

The water content (% by mass) in each of the lenses was determined in an ISO physiological saline at 20°C in accordance with the following formula, where W represents the mass (g) of the lens that had been conditioned, that is, in an equilibrium state, and W0 represents the mass (g) of the lens that had been dried for 16 hours in a dryer at 105°C.

$$\text{Water content (\% by mass)} = (W - W0)/W \times 100$$

(Refractive Index)

The refractive index of mercury e-line was measured in an ISO physiological saline at 20°C using a refractometer "2T" produced by Atago Co., Ltd.

(Dk (Oxygen Permeability))

The oxygen permeability coefficient of each of the lenses was measured in an ISO physiological saline at 35°C in accordance with the polarographic method described in ISO 18369-4 (2006) using a Seikaken-type film oxygen permeability produced by Rikaseiki Kogyo K.K. Note that the Dk value is expressed in units of $10^{-11}$ ($cm^2$/sec) . ($mLO_2$/ (mL ·mmHg)) .

(Luminous Transmittance)

The luminous transmittance of each of the lenses was measured in an ISO physiological saline using "UV-2550" produced by Shimadzu Corporation. The measurement was conducted under the following conditions: transmittance: (0 to 100%), slit: 5 nm, measurement wavelength: 780 to 380 nm. A lens holder was attached to a quartz cell. Subsequently, a light transmission spectrum was measured and subjected to data processing in order to determine luminous transmittance (780 to 380 nm).

(Results and Discussions)

Table 3 summarizes the water contents (% by mass) and the refractive indices, Dk values, and luminous transmittance values (%) of the silicone hydrogels 1 and 2 (Test Examples 1 and 11). Both silicone hydrogels 1 and 2, which had a suitable water content and a suitable refractive index, had a high oxygen permeability and a high luminous transmittance. Tables 4 to 6 summarize the constitution of each of the test examples, the amount (% by mass) of polymer added to the test example, the tensile fracture strength (MPa) of the test example, the change rate (%) relative to the control (Test Example 1 or 11) that did not include the polymer, the toughness (MPa) of the test example, and the change rate (%) relative to the control. The strains of Test Examples 1, 9, and 10 were 500%, 563%, and 515%, respectively. The moduli of elasticity of Test Examples 1, 9, and 10 were 0.23 MPa, 0.24 MPa, and 0.25 MPa, respectively. As described in Table 4, Test Examples 2 to 4, which included the comparative polymers 1 to 3, respectively, had a lower tensile fracture strength and lower toughness than Test Example 1, which did not include the polymer. In contrast, in Test Examples 5 to 8, which included the additive polymer 1 or 2, the changes in tensile fracture strength and toughness relative to Test Example 1, which did not include the polymer, were 50% or more. That is, tensile fracture strength and toughness were markedly increased. In Test Examples 9 and 10, which included the additive polymers 3 and 4, respectively, the changes in tensile fracture strength and toughness relative to Test Example 1, which did not include the polymer, were 15% or more. The results of Test Examples 5 to 10 confirm that, even when the mixing ratio between the Benz-M and TRIS included in the additive polymer is changed, tensile fracture strength and toughness can be increased. In particular, it is considered that, in the additive polymer, the molar ratio m/n of the triazole moiety A(m) to the silicone moiety B(n) having a siloxane bond is preferably 1/1 to 4/1. It was found that the molar ratio m/n is more preferably 2/1 to 3.5/1. The results of Test Examples 5 to 12 confirm that the advantageous effects of addition of the additive polymer can be produced regardless of whether the silicone hydrogel 1 or 2 is used, that is, even when the composition of the hydrogel is changed. In particular, it was found that the amounts of the additive polymers 1 to 4 added to 100 parts by mass of the base material that constitutes a silicone hydrogel are more preferably 10 parts by mass or less.

The compatibility between the additive polymer and the silicone hydrogel was studied. A Benz-M homopolymer,

which served as an additive polymer, was mixed with a mixed solution of monomers of the silicone hydrogel 3. The above homopolymer did not dissolve in the mixed solution. This confirmed that the additive polymer preferably includes a constitutional moiety that is the same as the moiety constituting the base material that constitutes a silicone hydrogel.

[Table 3]

| | Moisture Content | Refractive Indica | Dk Value | Luminous Transmittance Value |
|---|---|---|---|---|
| | % by mass | - | * | % |
| Silicone Hydrogel 1 (Test Example 1) | 56 | 1.403 | 64 | 98 |
| Silicone Hydrogel 2 (Test Example 11) | 40 | 1.423 | 129 | 98 |
| * in units of $10^{-11}(cm^2/sec) \cdot (mLO_2/(mL \times mmHg))$ | | | | |

[Table 4]

| Sample | Constituion | Amount | Tensile Strength | Change | Toughness | Change |
|---|---|---|---|---|---|---|
| | | % by mass | MPa | % | MPa | % |
| Test Example 1 | Silicone Hydrogel 1 | 0 | 1.27 | - | 2.85 | - |
| Test Example 2 | Gel 1 +Comparative Polymer 1 | 10 | 0.32 | -75 | 1.43 | -50 |
| Test Example 3 | Gel 1 +Comparative Polymer 2 | 10 | 0.65 | -49 | 1.54 | -46 |
| Test Example 4 | Gel 1 +Comparative Polymer 3 | 10 | 0.50 | -61 | 1.11 | -61 |

[Table 5]

| Sample | Constitution | Amount | Tensile Strength | Change | Toughness | Change |
|---|---|---|---|---|---|---|
| | | % by mass | MPa | % | MPa | % |
| Test Example 1 | Silicone Hydrogel 1 | 0 | 1.27 | - | 2.85 | - |
| Test Example 5 | Gel 1 +Additive Polymer 1 | 1 | 2.77 | +118 | 6.03 | +112 |
| Test Example 6 | Gel 1 +Additive Polymer 1 | 5 | 2.63 | +107 | 6.20 | +118 |
| Test Example 7 | Gel 1 +Additive Polymer 1 | 10 | 2.14 | +69 | 5.62 | +97 |
| Test Example 8 | Gel 1 +Additive Polymer 2 | 10 | 2.52 | +98 | 7.28 | +155 |
| Test Example 9 | Gel 1 +Additive Polymer 3 | 1 | 1.65 | +30 | 3.96 | +39 |
| Test Example 10 | Gel 1 +Additive Polymer 4 | 1 | 1.46 | +15 | 3.36 | +18 |

[Table 6]

| Sample | Constitution | Amount | Tensile Strength | Change | Toughness | Change |
|---|---|---|---|---|---|---|
| | | % by mass | MPa | % | MPa | % |
| Test Example 11 | Silicone Hydrogel 2 | 0 | 1.99 | - | 2.55 | - |
| Test Example 12 | Gel 2+Additive Polymer 2 | 1.2 | 2.31 | +16 | 3.03 | +19 |

Industrial Applicability

The additive polymer according to the present invention can be used for silicone gel contact lenses.

## Claims

1. An additive polymer capable of increasing a tensile fracture strength and a toughness of a silicone hydrogel to add to the silicone hydrogel,
the additive polymer including a benzotriazole skeleton, the additive polymer not having a polymerizable group.

2. The additive polymer according to Claim 1, having a constitution including a triazole moiety including the benzotriazole skeleton and a silicone moiety having a siloxane bond, the triazole moiety and the silicone moiety being bonded to each other with a carbon chain.

3. The additive polymer according to Claim 1 or 2, having a constitution represented by Formula (1),

[Chem. 1]

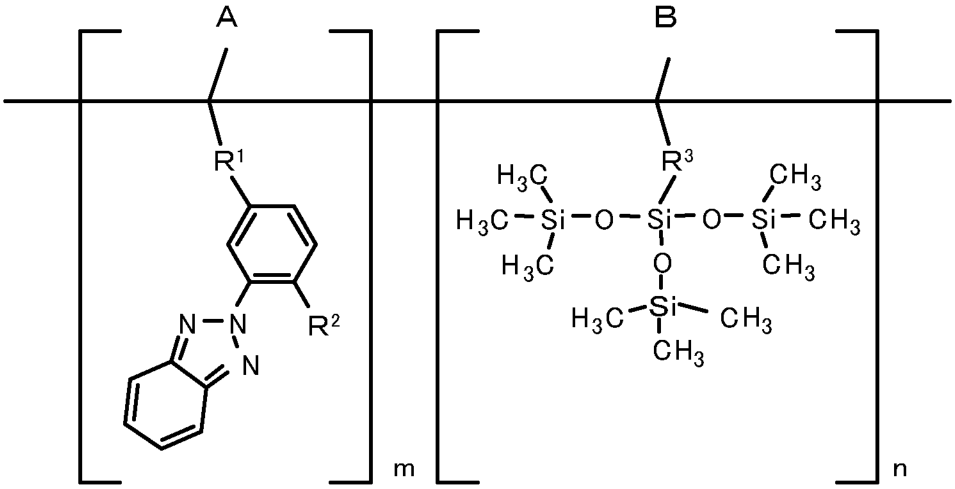

...(1)

(where a triazole moiety A and a silicone moiety B are bonded to a carbon chain in a predetermined order, m and n represent an integer, $R^1$, $R^2$, and $R^3$ represent a group, $R^1$ and $R^3$ may be the same as or different from each other, and $R^2$ represents one or more selected from a hydrogen atom, a hydroxyl group, an alkyl group, or an acyl group).

4. The additive polymer according to any one of Claims 1 **to 3,** having a constitutional moiety that is the same as a moiety constituting a base material that constitutes the silicone hydrogel.

5. A silicone hydrogel lens material comprising:

   a base material that constitutes a silicone hydrogel; and
   the additive polymer according to any one of Claims 1 **to 4,**
   wherein a content of the additive polymer is 20 parts by mass or less relative to 100 parts by mass of the base material.

6. The silicone hydrogel lens material according to Claim 5,
wherein the base material that constitutes the silicone hydrogel has a constitution represented by Formula (2).

[Chem. 2]

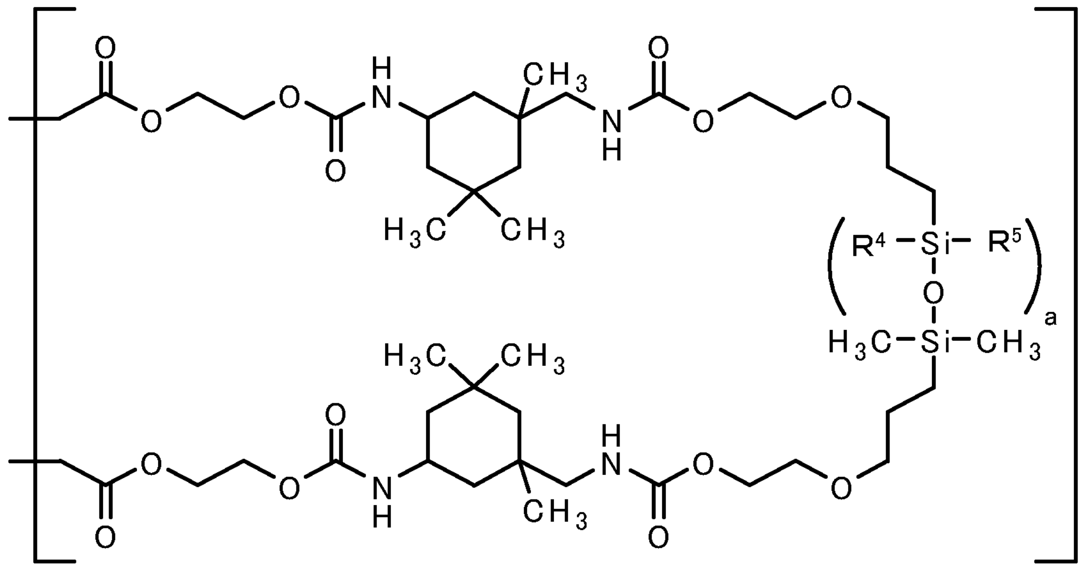

(where a represents an integer of 30 to 50, $R^4$ and $R^5$ represent one or more selected from an alkyl group and a halogen-substituted alkyl group, one or more $R^4$'s and $R^5$'s may be different from or the same as one another respectively)

**7.** The silicone hydrogel lens material according to Claim 5 or 6, wherein the silicone hydrogel lens material has a higher tensile fracture strength and a higher toughness than a silicone hydrogel that does not include the additive polymer by 10% or more and 15% or more, respectively.

## INTERNATIONAL SEARCH REPORT

International application No.
**PCT/JP2022/019045**

**A. CLASSIFICATION OF SUBJECT MATTER**

***C08F 220/34***(2006.01)i; ***C08F 230/08***(2006.01)i; ***G02C 7/04***(2006.01)i
FI: C08F220/34; C08F230/08; G02C7/04

According to International Patent Classification (IPC) or to both national classification and IPC

**B. FIELDS SEARCHED**

Minimum documentation searched (classification system followed by classification symbols)

C08F220/34; C08F230/08; G02C7/04

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 9-235309 A (MENICON CO LTD) 09 September 1997 (1997-09-09) claims, paragraphs [0021]-[0023], examples | 1-5, 7 |
| Y | | 6 |
| Y | JP 2016-133593 A (MENICON CO LTD) 25 July 2016 (2016-07-25) examples | 6 |
| A | JP 2014-534467 A (NOVARTIS AG) 18 December 2014 (2014-12-18) claims, example 4 | 1-7 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **01 July 2022** | **12 July 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2022/019045**

| Patent document cited in search report | Publication date (day/month/year) | Patent family member(s) | Publication date (day/month/year) |
|---|---|---|---|
| JP 9-235309 A | 09 September 1997 | (Family: none) | |
| JP 2016-133593 A | 25 July 2016 | (Family: none) | |
| JP 2014-534467 A | 18 December 2014 | US 2013/0095235 A1<br>claims, example 4<br>WO 2013/055746 A1<br>EP 2766750 A1<br>CN 103917899 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2005089654 A